**Europäisches Patentamt**

**European Patent Office**

**Office européen des brevets**

(19)

(11) Veröffentlichungsnummer : **0 487 886 B1**

(12) **EUROPÄISCHE PATENTSCHRIFT**

(45) Veröffentlichungstag der Patentschrift :
**13.04.94 Patentblatt 94/15**

(51) Int. Cl.$^5$ : **B01D 53/36**

(21) Anmeldenummer : **91117630.3**

(22) Anmeldetag : **16.10.91**

(54) **Verfahren und Vorrichtung zur selektiven katalytischen NOx-Reduktion in sauerstoffhaltigen Abgasen.**

(30) Priorität : **29.11.90 DE 4038054**

(43) Veröffentlichungstag der Anmeldung :
**03.06.92 Patentblatt 92/23**

(45) Bekanntmachung des Hinweises auf die
Patenterteilung :
**13.04.94 Patentblatt 94/15**

(84) Benannte Vertragsstaaten :
**CH DE DK ES FR GB IT LI NL**

(56) Entgegenhaltungen :
**DE-A- 3 830 045
DATABASE WPIL, no. 88-273826,DERWENT
PUBLICATIONS LTD, LONDON, GB
DATABASE WPIL, no. 90-372049,DERWENT
PUBLICATIONS LTD, LONDON, GB**

(73) Patentinhaber : **MAN Nutzfahrzeuge
Aktiengesellschaft
Postfach 50 06 20
D-80976 München (DE)**

(72) Erfinder : **JACOB, Eberhard, Dr. Dipl.-Chem.
Riedwinkel 2
W-8132 Tutzing (DE)**

## Beschreibung

Die Erfindung betrifft ein Verfahren gemäß dem Oberbegriff des Patentanspruchs (1) und eine Vorrichtung zur Durchführung des Verfahrens.

Die Verwendung von Harnstoff als selektives Reduktionsmittel für die katalytische Reduktion (SCR) von Stickoxiden in sauerstoffhaltigen Abgasen ist bekannt aus der DE-A- 38 30 045 sowie aus Held et al., SAE-Paper 900496 (1990) 13/20, 17/19. Dieses Verfahren vermeidet die Verwendung des giftigen und intensiv riechenden Ammoniaks. Durch die Anwendung von Harnstoff kann z.B. die Mitführung von Ammoniak bei Kraftfahrzeugen und die Lagerung von Ammoniak, die entsprechende Sicherheitsvorkehrungen erfordern, vermieden werden.

Bei dem bekannten Verfahren wird die Harnstofflösung unter Umständen vorgewärmt, direkt in die Abgasleitung vor dem Reduktionskatalysator (SCR-Katalysator) eingesprüht. Hierbei sind jedoch noch diverse technische Fragen ungelöst (siehe Held et al., loc. cit., 19). Vor allem bilden sich unerwünschte Reaktionsprodukte. Im einzelnen ist aus Held et al., (loc. cit., 17/19) bekannt, daß sich Harnstoff bei Temperaturen oberhalb von 160°C beim Einspritzen in den Abgasstrom zersetzt. Für die Zersetzung werden folgende Reaktionsgleichungen angegeben:

$$CO(NH_2) \rightarrow 2 \cdot NH_2 + CO \qquad (1)$$
$$CO/NH_2)_2 + H_2O \rightarrow 2 \cdot NH_3 + CO_2 \qquad (2)$$

Der Bildung von Aminoradikalen nach (1) schließen sich Sekundärreaktionen unbekannter Art an. Als weitere Produkte der Harnstoffzersetzung sind Cyanursäure, Isocyansäure u.ä. aufgeführt. Durch die Bildung dieser Sekundärprodukte erklärt sich der in Abbildung 11 der vorstehenden Literaturstelle angegebene Harnstoffbedarf von 0,6 Mol Harnstoff je Mol zersetzten N0. Aus Schmidt, Öster. Chem. Ztg. 68 (1967) 175 ist bekannt, daß sich Harnstoff beim extrem raschen Erhitzen auf 350°C gemäß der Gleichung

$$CO(NH_2)_2 \rightarrow NH_3 + HNCO \qquad (3)$$

zersetzt. Bei Temperaturen unterhalb 350°C und beim langsamen Erhitzen entsteht hauptsächlich feste, unschmelzbare Cyanursäure durch Trimerisierung der nach (3) gebildeten Isocyansäure gemäß

$$3 HNCO \underset{>350°C}{\overset{<350°C}{\rightleftarrows}} (HNCO)_3 \qquad (4)$$

Die Cyanursäure vermag bei Temperaturen über 350°C in Umkehrung der Gleichung (4) zu depolymerisieren. Ein direktes Einspritzen einer Harnstofflösung nach Held et al., (siehe oben) ergab nach eigenen Untersuchungen eine starke Abhängigkeit der Reaktionsprodukte vor SCR-Katalysator von der Abgastemperatur. Bei 160°C war die Zersetzung nach (2) gering. Hauptprodukt war ein Feststoffgemisch vor allem aus unzersetzten Harnstoff und aus Cyanursäure. Bei 350°C wurde in der Gasphase $NH_3$ und HNCO im Verhältnis 3,2:1 gefunden. Die Feststoffbildung ging deutlich zurück, führte aber zu Ablagerungen auf dem nachgeschalteten SCR-Katalysator.

Der Erfindung liegt die Aufgabe zugrunde, ein Verfahren der eingangs genannten Art zu schaffen, mit dem $NO_x$ aus Abgasen einwandfrei und ohne Bildung von anderen Schadstoffen reduziert werden kann.

Die Aufgabe wird erfindungsgemäß mit den Merkmalen des Anspruchs 1 gelöst.

Mit der Erfindung ist ein Verfahren geschaffen, das eine quantitative Zersetzung des Harnstoffs durch Hydrolyse zu $NH_3$ und $CO_2$ gemäß der Reaktionsgleichung (2) über den für das SCR-Verfahren wichtigen Temperaturbereich von 180°-550°C ermöglicht. Zersetzungsreaktionen nach (1), (3) und (4) und deren Folgereaktionen, die zur Bildung von gasförmigen Schadstoffen (CO, HNCO)und von den der Katalysatorbetrieb störenden Feststoffen (Cyanursäure, unzersetzter Harnstoff u.a.) werden vollständig vermieden. Der Harnstoffbedarf zur Zersetzung des $NO_x$ wird dabei außerdem auf 0,5 Mol Harnstoff je Mol zersetztem $NO_x$ abgesenkt. Das Verfahren hat den weiteren Vorteil, daß sämtliche für das Verfahren erforderlichen Hilfseinrichtungen fahrzeugtauglich sind.

Gemäß einer Ausgestaltung der Erfindung wird die quantitative Hydrolyse von Harnstoff gemäß Reaktiongleichung (2) bei Temperaturen ab 160°C erreicht,durch Versprühen einer wässerigen Harnstofflösung mit entsprechenden Einrichtungen, die Tröpfchendurchmesser unter 10μm erlauben und durch Verdampfung oberhalb von 160°C mit einer entsprechend hohen spezifischen Heizleistung.

Die Verdampferoberflächen werden vorzugsweise mit einem Katalysator großer spezifischer Oberfläche beschichtet (1 - 100μm dick), dessen Aktivkomponenten die Geschwindigkeit der Reaktion (2) um Größenordnungen gegenüber denen der unerwünschten Konkurrenzreaktionen (1, 3, 4 u. a.) anheben.

Die gasförmigen Produkte, die den Verdampfer verlassen, werden gemäß einer weiteren Ausgestaltung der Erfindung zur Nachbehandlung, insbesondere zur Hydrolyse der nach (3) gebildeten Isocyansäure gemäß

$$HNCO + H_2O \rightarrow NH_3 + CO_2 \qquad (5)$$

durch eine Katalysatorwabe (1.550-7.750 Zellen/dm² bzw. 100 - 500 Zellen/inch²) mit einer Raumgeschwindigkeit von 5.000 - 150.000h⁻¹ geleitet, die mit einem Hydrolysekatalysator beschichtet ist.

Als Aktivkomponenten des Katalysators, die die Hydrolyse (2) des Harnstoffs katalysieren und die Bildung fester, nichtflüchtiger Zersetzungsprodukte des Harnstoffs (vergleiche z. B. Reaktion (4) inhibieren, haben sich großoberflächige Oxide, deren Mischungen und/oder Verbindungen als geeignet erwiesen. Die BET-Oberflächen dieser Oxide sollen mindestens $10m^2/g$ betragen. Besonders vorteilhaft sind BET-Oberflächen zwischen 60 - $250m^2/g$.

Als Aktivkomponenten für die Ausführung der Harnstoffhydrolyse direkt im Abgasstrom, der meist zwischen 5 und 90ppm $SO_2$ enthält, haben sich Feststoffsäuren aus Oxiden des Systems $SiO_2$-$Al_2O_3$-$TiO_2$-$ZrO_2$ mit geringen Sulfatgehalten als geeignet erwiesen. $TiO_2$ ist in der Anatasmodifikation besonders aktiv und wird mit 3 - 15 Gew.% $WO_3$ thermisch stabilisiert. Geeignete Aktivkomponenten für die Ausführung der Harnstoffhydrolyse in einem abgasfreien Nebenstrom sind zusätzlich amphotere Mischoxide im System $SiO_2$-$Al_2O_3$-$TiO_2$ und Feststoffbasen im System $Al_2O_3$-Alkalimetalloxid-Erdalkalimetalloxid. Als Katalysatorträgermaterial wird im Abgas vorzugsweise eine hitze- und korrosionsbeständige FeCrAl-Legierung eingesetzt. In abgasfreien Systemen haben sich auch Leichtmetalle (Al, Al-Legierungen, Ti) bewährt.

Die Erfindung wird im folgenden anhand der Zeichnungen erläutert, die zwei Ausführungsbeispiele für Einrichtungen zur Durchführung des erfindungsgemäßen Verfahrens an einer Fahrzeug-Brennkraftmaschine wiedergeben. In beiden Ausführungsbeispielen handelt es sich jeweils um eine Diesel-Brennkraftmaschine 1 mit einem Abgassammler 2 und einem SCR-Katalysator 5 zur $NO_x$-Verminderung.

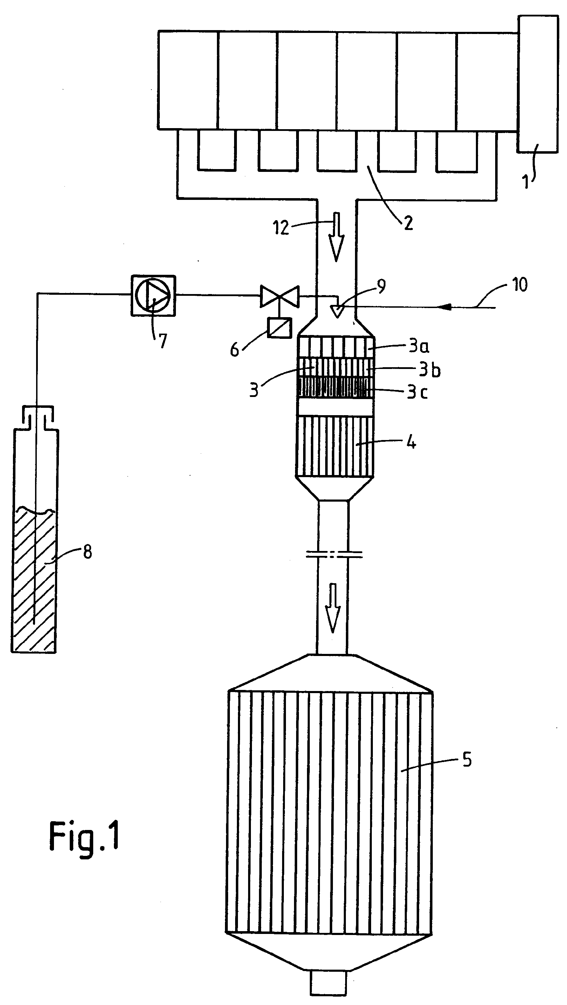

Im Ausführungsbeispiel gemäß Fig. 1 befindet sich in der Abgasleitung vor dem SCR-Katalysator 5 ein Verdampfer 3, der einer Zerstäuberdüse 9 vorgelagert ist, die mit Preßluft 10 aus dem Bordnetz des Fahrzeugs betrieben wird. Die Düse 9 wird über ein Regelventil 6 mittels einer Pumpe 7 aus einem Behälter 8 mit Harnstofflösung versorgt. Der Verdampfer 3 enthält einen dreiaeteilten Metallwabenkörper 3a - c mit 1.550, 3100 und 4650 Zellen/dm² (100, 200 und 300-Zellen/inch²) von 15l Volumen, dessen Oberflächen mit einem Hydrolysekatalysator auf $Al_2O_3$/$ZrO_2$-Basis beschichtet sind. Die Beheizung des Verdampfers 3 erfolgt durch den Abgasstrom 12. Im Abgasströmungsrichtung nach dem Verdampfer 3 befindet sich ein Hydrolysekatalysator 4 zur Nachbehandlung der aus dem Verdampfer strömenden gasförmigen Produkte. Der Hydrolysekatalysator 4 besitzt als Träger eine Metallwabe mit 200 - 600 Zellen/inch² aus einer FeCrAl-Legierung. Die Aktivkomponenten des Hydrolysekatalysators sind mit $WO_3$-stabilisierten $TiO_2$ in der Anatasmodifikation beschichtet. Die maximale Raumgeschwindigkeit beträgt 80.000h⁻¹. Zum Beispiel werden in einem Abgasvolumenstrom von 1200Nm³/h (Vollastpunkt bei Nenndrehzahl der Diesel-Brennkraftmaschine) mit 1.000vpm $NO_x$ durch Einspritzen von 2,28l/h einer 50%igen Harnstofflösung in Wasser 800vpm $NH_3$ bei Arbeitstemperaturen zwischen 280 und 500°C erzeugt.

Nach dem SCR-Katalysator 5 bekannter Bauart ($V_2O_5$/$WO_3$/$TiO_2$-Typ, RG:15.000h⁻¹)wurden 200vpm Rest-$NO_x$ gemessen. In einem weiteren Beispiel wurden bei einem Abgasvolumenstrom von 360 Nm³/h mit 400vpm $NO_x$ durch Einsprühen von 0,17l/h einer 50%igen Harnstofflösung in Wasser, 200 vpm $NH_3$ im Arbeitstemperaturbereich zwischen 220 und 280°C erzeugt. Nach dem SCR-Katalysator 5 (RG:4500h⁻¹)wurden 200 vpm Rest-$NO_x$ gemessen.

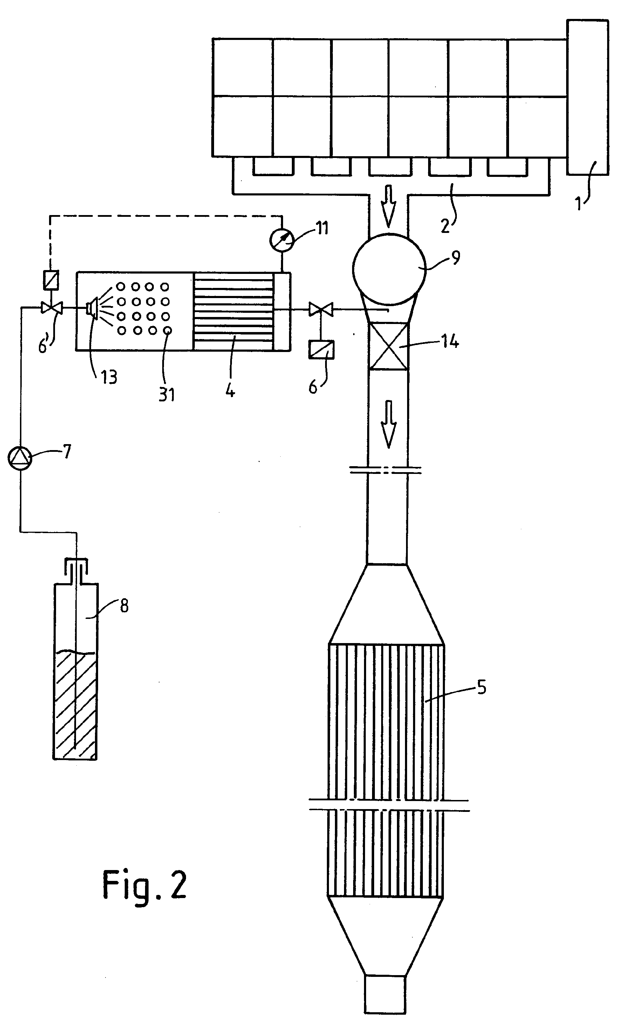

Nach Fig. 2 wird die Harnstofflösung aus dem Behälter 8 mittels der Pumpe 7 und einer Sprühvorrichtung 13 auf die Verdampferrohre aus AlMg5 eines Röhrenverdampfers 31 verteilt. Der Röhrenverdampfer wird elektrisch und/oder mit Heißluft oder-dampf auf 140°-300°C geheizt. Die Verdampferrohre wurden durch Böhmitieren mit 10μm Al-Mg-Mischoxid beschichtet. Der dem Verdampfer 31 nachgeschaltete Hydrolysekatalysator 4 besteht aus einer Wabe mit 500-Zellen/inch² aus Al-Blech von 60μm Stärke mit einer 20μm-dicken Eloxalschicht aus $\gamma$-$Al_2O_3$, die mit Zn-Natronlauge 1 Minute getränkt wurde und anschließend bei 400° 1h im Luftstrom getrocknet wird. Das durch die Harnstoffhydrolyse bei 140-300°C gebildete Gasgemisch aus $NH_3$ und $H_2O$ wird über das Regelventil 6 in den Abgasstrom unmittelbar nach einem Turbolader 9 eingeblasen. Ein Druckwächter 11 begrenzt den Gesamtdruck im Verdampfer/Katalysator 31,4 durch Einwirkung auf das Regelventil 6' auf 2 bar. Nach der $NH_3$-Einspeisung ist ein statischer Gasmischer 14 angeordnet. Die Leistungsfähigkeit des Systems wird an folgendem Betriebsbeispiel demonstriert:

In einem Abgasvolumenstrom von 1200 Nm³/h mit 1000 vpm $NO_x$-Gehalt werden im Arbeitstemperaturbereich 280-450°C/800 vpm $NH_3$ eingespeist. Nach dem SCR-Katalysator 5 ($V_2O_5$/$WO_3$/$TiO_2$-Typ) wurden 200 vpm Rest-$NO_x$ gemessen. Die Erzeugung des $NH_3$ erfolgt im Verdampfer/Katalysator 3,4 durch Einsprühen von 2,28 l/h einer 50%igen Harnstofflösung in Wasser bei einer Heizleistung von 2,3 KWh.

In beiden Beispielen betrug der Harnstoffbedarf 0,5 Mol Harnstoff pro Mol zersetztem $NO_x$.

## Patentansprüche

1. Verfahren zur selektiven katalytischen $NO_x$-Reduktion in sauerstoffhaltigen Abgasen unter Anwendung von Harnstoff und einem Reduktionskatalysator (5), wobei der Harnstoff vor dem Kontakt mit dem Re-

duktionskatalysator zu $NH_3$ und $CO_2$ hydrolysiert wird, dadurch gekennzeichnet, daß die Verdampfung und Hydrolyse des Harnstoffs zu $NH_3$ und $CO_2$ an Oberflächen eines Verdampfers (3,31) und nachfolgenden Hydrolysekatalysators (4) erfolgt, die mit Aktivkomponenten beschichtet sind, die die quantitative Umwandlung von Harnstoff in Ammoniak und $CO_2$ katalysieren und die Bildung unerwünschter, fester Reaktionprodukte des Harnstoffs inhibieren.

2. Verfahren nach Anspruch 1, dadurch gekennzeichnet, daß eine wässrige Harnstofflösung verwendet wird, die mit einer Düse (9, 13) derart auf einen Verdampfer (3,31) versptüht wird, daß der Tropfendurchmesser der Lösung unter 10$\mu$m beträgt.

3. Verfahren nach Anspruch 2, dadurch gekennzeichnet, daß die Harnstofflösung mit einer Heizleistung verdampft wird, die eine Verdampfungszeit von unter 1 sec. ermöglicht.

4. Verfahren nach Anspruch 1, dadurch gekennzeichnet, daß man als Aktivkomponenten großoberflächige Oxide, Hydroxide oder deren Mischungen und/oder Verbindungen verwendet.

5. Verfahren nach Anspruch 4, dadurch gekennzeichnet, daß man Oxide mit Feststoffsäureeigenschaften verwendet, die Titandioxid, Aluminiumoxid, Siliziumdioxid oder deren Mischphasen und Verbindungen untereinander als Matrixoxid enthalten, wobei die Säureeigenschaften durch Zusatz von Oxiden fünf- und sechswertiger Elemente, wie $SO_3$ und $WO_3$, als Stabilisatoren und zur Verstärkung der Aktivität herangezogen werden.

6. Verfahren nach Anspruch 4, dadurch gekennzeichnet, daß man Oxide mit amphoterem oder basischem Charakter verwendet, die Oxide im System $SiO_2$–$Al_2O_3$-$TiO_2$-$ZrO_2$ als Matrixoxid enthalten, wobei die basischen Eigenschaften durch Hinzufügung von Alkali- oder Erdalkalioxiden erzeugt werden.

7. Verfahren nach Anspruch 4 oder 5, dadurch gekennzeichnet, daß die Katalysator-unterstützte Verdampfung und Hydrolyse direkt im Abgaskatalysator erfolgt.

8. Verfahren nach Anspruch 4 oder 6, dadurch gekennzeichnet, daß die Katalysator-unterstützte Verdampfung und Hydrolyse in einem Nebenstrom außerhalb des Abgasstroms erfolgt.

9. Verfahren nach einem der vorhergehenden Ansprüche, dadurch gekennzeichnet, daß die Hydrolyse des Harnstoffs bei 160 - 600°C, vorzugsweise bei 220 - 400°C, ausgeführt wird.

10. Verfahren nach einem der Ansprüche 4 bis 8, dadurch gekennzeichnet, daß man als Katalysatorträger eine Wabenstruktur aus einer hitze- und abgasbeständigen Metallegierung verwendet.

11. Verfahren nach einem der Ansprüche 1 bis 8, dadurch gekennzeichnet, daß man als Katalysatorträger eine Wabenstruktur aus Aluminium, Titan oder ihren Legierungen verwendet.

12. Vorrichtung zur Durchführung des Verfahrens nach Anspruch 1, mit einem in einer Abgasleitung enthaltenen Reduktionskatalysator (5) sowie einem Harnstoffbehälter (8), der mittels einer Zuführeinrichtung mit dem Abgasystem verbunden ist, dadurch gekennzeichnet, daß die Zuführeinrichtung mit einer Sprühdüse (9, 13) verbunden ist, mit der die flüssige Harnstofflösung auf einen Verdampfer (3, 31) fein versprühbar ist, daß sich and den Verdampfer ein Hydrolysekatalysator anschließt und daß die inneren Oberflächen des Verdampfers und die Oberflächen des Hydrolysekatalysators (4) mit einem Katalysator beschichtet sind.

13. Vorrichtung nach Anspruch 12, dadurch gekennzeichnet, daß der Verdampfer (3) mehrstufig mit in Stömungsrichtung feiner werdenden Waben- oder Maschenkörpern (3a - c) ausgebildet ist.

14. Vorrichtung nach Anspruch 12, dadurch gekennzeichnet, daß der Verdampfer ein Röhrenverdampfer (31) ist.

15. Vorrichtung nach einem der Ansprüche 12 bis 14, dadurch gekennzeichnet, daß der Verdampfer (3) und/oder der Hydrolysekatalysator (4) im Abgasrohr angeordnet ist.

## Claims

1. A process for selective catalytic $NO_x$ reduction in exhaust gases containing oxygen, using resin and a reduction catalytic converter (5), the resin being hydrolysed to $NH_3$ and $CO_2$ prior to contact with the reduction catalytic converter, **characterised in that** evaporation and hydrolysis of the resin to produce $NH_3$ and $CO_2$ take place on surfaces of an evaporator (3, 31) and a subsequent hydrolysis catalytic converter (4), both coated with active components which catalyse the quantitative conversion of resin into ammonia and $CO_2$, and inhibit the formation of unwanted solid reaction products from the resin.

2. A process in accordance with claim 1, **characterised in that** an aqueous resin solution is used, and is sprayed by means of a nozzle (9, 13) on to an evaporator (3, 31) in such a manner that the diameter of the drops of solution is less than 10 $\mu$m.

3. A process in accordance with claim 2, **characterised in that** the resin solution is evaporated using a heating capacity which allows an evaporation time of less than 1 second.

4. A process in accordance with claim 1, **characterised in that** high-area oxides or hydroxides, or mixtures and/or compounds thereof, are used as active components.

5. A process in accordance with claim 4, **characterised in that** oxides with solid acid properties are used, and contain titanium dioxide, aluminium oxide, silicon dioxide, or mixed phases and compounds thereof as a matrix oxide, the acidic properties being introduced by the addition of oxides of pentavalent and hexavalent elements, such as $SO_3$ and $WO_3$, as stabilisers, and to intensify activity.

6. A process in accordance with claim 4, **characterised in that** oxides are used of an amphoteric or basic nature, containing oxides in the $SiO_2$-$Al_2O_3$-$TiO_2$-$ZrO_2$ system as a matrix oxide, the basic properties being produced by addition of alkali oxides or alkaline earth oxides.

7. A process in accordance with claim 4 or 5, **characterised in that** evaporation and hydrolysis supported by the catalytic converter take place directly within the exhaust gas catalytic converter.

8. A process in accordance with claim 4 or 6, **characterised in that** evaporation and hydrolysis supported by the catalytic converter take place in a secondary flow outside the flow of exhaust gas.

9. A process in accordance with one of the preceding claims, **characterised in that** hydrolysis of the resin is carried out at 160 - 600°C, preferably at 220 - 400°C.

10. A process in accordance with one of claims 4 to 8, **characterised in that** a honeycomb structure made of a metal alloy resistant to heat and exhaust gases is used as a catalyst carrier.

11. A process in accordance with one of claims 1 to 8, **characterised in that** a honeycomb structure made of aluminium, titanium or an alloy thereof is used as a catalyst carrier.

12. A device for carrying out the process in accordance with claim 1, with a reduction catalytic converter (5) contained in an exhaust gas pipe, and also with a container (8) holding resin and connected to the exhaust system via a supply device, **characterised in that** the supply device is connected to a spraying nozzle (9, 13) by means of which the liquid resin solution can be sprayed in fine drops onto an evaporator (3, 31), and a hydrolysis catalytic converter is connected to the evaporator, and the inner surfaces of the evaporator and the surfaces of the hydrolysis catalytic converter (4) are coated with a catalyst.

13. A device in accordance with claim 12, **characterised in that** the evaporator (3) is formed with multiple stages, having bodies (3a - c) with a honeycomb or mesh structure becoming finer along the direction of flow.

14. A device in accordance with claim 12, **characterised in that** the evaporator is a tube evaporator (31).

15. A device in accordance with one of claims 12 to 14, **characterised in that** the evaporator (3) and/or the hydrolysis catalytic converter (4) is arranged in the exhaust pipe.

**Revendications**

1. Procédé pour la réduction catalytique sélective de $NO_x$ dans des gaz d'échappement contenant de l'oxygène, en utilisant de l'urée et un catalyseur de réduction (6), l'urée étant avant le contact avec le catalyseur de réduction, hydrolysée en $NH_3$ et $CO_2$, procédé caractérisé en ce que la vaporisation et l'hydrolyse de l'urée en $NH_3$ et $CO_2$ s'effectuent sur des surfaces d'un évaporisateur (3, 31) et d'un catalyseur d'hydrolyse (4) venant à la suite, qui sont revêtues de composants actifs qui catalysent la conversion quantitative de l'urée en ammoniac et $CO_2$ et qui inhibent la formation indésirable de produits de réaction solides de l'urée.

2. Procédé selon la revendication 1, caractérisé en ce qu'on utilise une solution aqueuse d'urée, qui est vaporisée avec une buse (9, 13) sur un évaporisateur (3, 31) de sorte que le diamètre des gouttelettes de la solution se situe au-dessous de $10\mu m$.

3. Procédé selon la revendication 2, caractérisé en ce que la solution d'urée est vaporisée avec une puissance de chauffe permettant un temps de vaporisation inférieur à 1 seconde.

4. Procédé selon la revendication 1, caractérisé en ce qu'on utilise comme composants actifs, des oxydes à grandes surfaces, des hydroxydes ou bien leurs mélanges et/ou leurs combinaisons.

5. Procédé selon la revendication 4, caractérisé en ce qu'on utilise des oxydes avec des propriétés d'acides solides, qui contiennent comme oxydes de matrice du dioxyde de titane, de l'oxyde d'aluminium, du dioxyde de silicium ou bien leurs phases de mélange et leurs combinaisons entre eux, tandis qu'il est fait appel aux propriétés acides par addition d'oxydes d'éléments pentavalents et hexavalents, tels que $SO_3$ et $WO_3$, comme stabilisateurs et pour le renforcement de l'activité.

6. Procédé selon la revendication 4, caractérisé en ce qu'on utilise des oyxdes avec un caractère amphotère ou bien basique, qui contiennent des oxydes dans le système $SiO_2$ - $Al_2O_3$ - $TiO_2$ - $ZrO_2$ comme oxydes de matrice, tandis que les propriétés basiques sont obtenues par adjonction d'oxydes alcalins ou alcalinoterreux.

7. Procédé selon la revendication 4 ou la revendication 5, caractérisé en ce que la vaporisation et l'hydrolyse assistées par catalyseurs s'effectuent directement sur le catalyseur des gaz d'échappement.

8. Procédé selon la revendication 4 ou la revendication 6, caractérisé en ce que la vaporisation et l'hydrolyse assistées par catalyseurs, s'effectuent dans un écoulement secondaire en dehors de l'écoulement des gaz d'échappement.

9. Procédé selon l'une quelconque des revendications précédentes, caractérisé en ce que l'hydrolyse de l'urée est effectuée à 160 - 600°C, de préférence à 220 - 400°C.

10. Procédé selon l'une quelconque des revendications 4 à 8, caractérisé en ce qu'on utilise comme supports de catalyseurs, une structure en nids d'abeilles en un alliage métallique résistant à la chaleur et aux gaz d'échappement.

11. Procédé selon l'une quelconque des revendications 1 à 8, caractérisé en ce qu'on utilise comme supports de catalyseurs, une structure en nids d'abeilles en aluminium, titane ou leurs alliages.

12. Dispositif pour la mise en oeuvre du procédé selon la revendication 1, avec un catalyseur de réduction (5) contenu dans une canalisation de gaz d'échappement, ainsi qu'avec un réservoir d'urée (8) qui est relié au système de gaz d'échappement par un moyen d'alimentation, dispositif caractérisé en ce que le moyen d'alimentation est relié à une buse de vaporisation (9, 13) avec laquelle la solution liquide d'urée est susceptible d'être finement pulvérisée sur un évaporisateur (3, 31), en ce que, à cet évaporisateur, se raccorde un catalyseur d'hydrolyse, et en ce que la surface interne de l'évaporisateur et la surface du catalyseur d'hydrolyse (4) sont revêtues d'un catalyseur.

13. Dispositif selon la revendication 12, caractérisé en ce que l'évaporisateur (3) est prévu à plusieurs étages avec des structures de nids d'abeilles ou de mailles (3a - c) devenant plus fines dans le sens de l'écoulement.

14. Dispositif selon la revendication 12, caractérisé en ce que l'évaporisateur est un évaporisateur tubulaire (31).

15. Dispositif selon l'une quelconque des revendications 12 à 14, caractérisé en ce que l'évaporisateur (3) et/ou le catalyseur d'hydrolyse (4) sont disposés dans la tubulure des gaz d'échappement.

Fig.1

Fig.2